Europäisches Patentamt

European Patent Office

Office européen des brevets

(11) Publication number : **0 530 989 A2**

# EUROPEAN PATENT APPLICATION

(21) Application number : **92307325.8**

(22) Date of filing : **11.08.92**

(51) Int. Cl.[5] : **H01M 10/39, C04B 35/10**

(30) Priority : **12.08.91 JP 226551/91**

(43) Date of publication of application :
**10.03.93 Bulletin 93/10**

(84) Designated Contracting States :
**DE FR GB**

(71) Applicant : **NGK INSULATORS, LTD.**
**2-56, Suda-cho, Mizuho-ku**
**Nagoya City Aichi Pref. (JP)**

(72) Inventor : **Kato, Makoto**
**7-3, Haruta 3-chome, Nakagawa-Ku**
**Nagoya City, Aichi Pref. (JP)**

(74) Representative : **Paget, Hugh Charles Edward**
**et al**
**MEWBURN ELLIS 2 Cursitor Street**
**London EC4A 1BQ (GB)**

(54) **Beta-alumina solid electrolyte and methods of producing the same.**

(57) An excellent beta-alumina solid electrolyte for sodium-sulfur cells is provided simultaneously satisfying a high strength and a low resistance wherein $\beta$- and $\beta''$-alumina crystals simultaneously satisfy three conditions of an average particle diameter of 1-4 $\mu$m calculated as a diameter equivalent to a circle, an amount of crystals of a particle size of not larger than 5 $\mu$m of 85-98 wt%, and a maximum particle diameter of not larger than 300 $\mu$m. Methods for producing the beta-alumina solid electrolyte are also disclosed.

EP 0 530 989 A2

The present invention relates to beta-alumina solid electrolyte having a high strength and a low resistance to be used for sodium-sulfur cells and methods of producing the same.

In the present invention, the expression "beta-alumina" means both of $\beta$-alumina and $\beta''$-alumina.

Heretofore, beta-alumina tubes are used as solid electrolytes for sodium-sulfur cells. Such solid electrolytes have been requested to have high strength and low resistance from the viewpoints of characteristic properties, life and reliability. Such solid electrolytes are constituted from crystals of $\beta$-alumina, $\beta''$-alumina and sodium aluminate, etc., and ratio of the respective crystals and particle diameters of $\beta$-alumina and $\beta''$-alumina in the solid electrolyte have been known to determine the strength and resistance of the solid electrolyte.

Therefore, methods have been adopted of increasing the amount of $\beta''$-alumina crystals or increasing the amounts of $Li_2O$, MgO and $Na_2O$ which are alkaline and alkaline earth components of the $\beta$-alumina solid electrolyte to decrease the resistance thereof, or a method have been adopted of adding a third component, such as, $ZrO_2$, etc., having a function of preventing the development of the crystal grains to increase the strength of the solid electrolyte. However, the mere adoption of such conventional methods could not achieve high strength and low resistance simultaneously, and contradictions that high strength results in high resistance or low resistance results in low strength of the solid electrolyte could not be solved.

An object of the present invention is to solve the above described prior problems and to provide a beta-alumina solid electrolyte which can simultaneously achieve high strength and low resistance wh.ich hitherto could not be obtained simultaneously.

In order to solve the above-described problems, the inventor made studies and experiments on influences of particle diameters of $\beta$-alumina and $\beta''$-alumina crystals on the strength and resistance of the solid electrolyte. As a result, the inventor has found out that the high strength and low resistance of the solid electrolyte can be satisfied simultaneously, if average particle diameters, particle size distributions and maximum particle diameters of $\beta$-alumina crystal and $\beta''$-alumina crystals are ingeniously balanced in a specific region.

The present invention has been accomplished based on such a finding as a result of the researches, and the gist of the present invention is a $\beta$-alumina solid electrolyte wherein $\beta$- and $\beta''$-alumina crystals simultaneously satisfy three conditions of an average particle diameter of 1-4 $\mu$m calculated as a diameter equivalent to a circle, an amount of crystals of a particle size of not larger than 5 $\mu$m of 85-98 wt%, and a maximum particle diameter of not larger than 300 $\mu$m.

As described above, in the present invention, an average particle diameter of $\beta$- and $\beta''$-alumina crystals calculated as a diameter equivalent to a circle is controlled to a range of 1-4 $\mu$m. If the average particle diameter is less than 1 $\mu$m, the resistance of the solid electrode is undesirably increased, even though the strength of the solid electrolyte is satisfactory. Conversely, if the average particle diameter exceeds 4 $\mu$m, the strength of the solid electrolyte is decreased. For reference, in conventional beta-alumina solid electrolytes heretofore used, $\beta$- and $\beta''$-alumina crystals have usually an average particle diameter of 5-10 $\mu$m.

Also, in the present invention, an amount of crystals of $\beta$- and $\beta''$-alumina crystals of a particle size of not larger than 5 $\mu$m is controlled to a range of 85-98 wt%. If the amount of the crystals of a particle size of not larger than 5 $\mu$m is less than 85 wt%, the strength of the solid electrolyte is decreased, while if the amount exceeds 98 wt%, the resistance of the solid electrolyte is undesirably increased.

Also, in the present invention, a maximum particle diameter of $\beta$- and $\beta''$-alumina crystals is controlled to not more than 300 $\mu$m. If a large particle of a diameter of exceeding 300 $\mu$m is existent in the structure of the solid electrolyte at a certain point, a crack is incurred to progress from the point, so that there occurs an afraid that the beta-alumina solid electrolyte is destructed. The beta-alumina solid electrolyte of the present invention is a substance wherein particle diameters of $\beta$- and $\beta''$-alumina crystals have been controlled to simultaneously satisfy the above three conditions. As concrete means for such controlling of the particle diameters, controlling of a heat curve of firing of the solid electrolyte may be mentioned, in addition to increasing of residual amount of sodium aluminate remaining after firing of the solid electrolyte and addition of a third component, such as, $ZrO_2$ etc. Though use of a low firing temperature prevents development of crystal grains resulting in decrease of the maximum particle diameter of the crystals, a mere adoption of a low firing temperature is not preferable because $\beta$- and $\beta''$-alumina crystals in the matrix portion of the solid electrolyte are not developed sufficiently resulting in increase of the resistance value of the solid electrolyte. Therefore, an effective means of control:ing the particle diameters is not to use a low firing temperature but to contrive to rapidly perform cooling of the fired solid electrolyte so as to obtain fine $\beta$- and $\beta''$-alumina crystals.

In the beta-alumina solid electrolyte of the present invention, particle diameters, particle size distribution and maximum particle diameters of $\beta$-alumina crystals and $\beta''$-alumina crystals are ingeniously balanced in a specific region, so that high strength and low resistance of $\beta$-alumina solid electrolyte which hitherto were difficult to achieve simultaneously are now achieved simultaneously. Therefore, the present invention solves the prior problem to remarkably contribute to the development of the industry.

Hereinafter, the present invention will be explained in more detail with reference to examples.

Example 1-5

A β-alumina tube having a closed end and a size of an outer diameter of 40 mm, a length of 460 mm and a thickness of 2.0 mm was formed by a rubber press method and fired in a firing temperature range of 1,580-1,650°C with various heating curves to obtain solid electrolytes of various beta-alumina having different crystal particle diameters as shown in the following Table 1.

Particle diameter, compression strength and 4 points resistance of β- and β″-alumina crystals were measured to obtain the results as shown in Table 1. The measurements of particle diameter of β- and β″-alumina crystals were effected by a method of polishing a cross-section of the beta-alumina tube to a mirror surface, etching the cross-section by hot phosphoric acid, observing the etched cross-section by a scanning electron microscope (SEM), and analyzing the observed image by me.ns of an image analyzing apparatus.

The measurements of compression strength were effected by a method of slicing the beta-alumina tube by a length of 10 mm, compressing the sliced piece at a cross-speed of 0.5 mm/min until breakage by using an autograph produced by Shimazu Seisakusho K.K., and calculating a strength from the value at the breakage.

The measurements of the 4 points resistance were effected by a method of applying carbon electrodes on the both ends of a test piece of a size of 2 x 2 x 40 mm, connecting the electrodes to Pt lead wires, elevating the temperature of the test piece to 350°C, and measuring the resistance of the test piece in axial direction thereof.

As seen from the data shown in Table 1, the beta-alumina solid electrolyte which are within the numerical range of the present invention have compression strengths of $300 \pm 50$ MPa and 4 points resistances of 4.5-5.0 $\Omega$cm (at 350°C), so that they can clearly satisfy high strength and low resistance simultaneously. Conventional substance shown as Comparative Example 7 has a large particle diameter, so that it has a low strength, though it has a low resistance.

## Table 1

| $\beta$-and $\beta''$=alumina crystal particle diameter | Example | | | | | Comparative Example | |
|---|---|---|---|---|---|---|---|
| | 1 | 2 | 3 | 4 | 5 | 6 | 7 |
| Average Particle Diameter ($\mu$m) | 1.0 | 1.4 | 2.1 | 3.0 | 4.0 | 0.7 | 7.0 |
| Particles of Diameters of not more than 5 $\mu$m ( wt%) | 98 | 97 | 96 | 90 | 87 | 99 | 35 |
| Maximum Particle Diameter ($\mu$m) | 40 | 60 | 100 | 200 | 300 | 20 | 400 |
| Compression Strength (MPa) | 270 | 280 | 330 | 305 | 250 | 215 | 205 |
| 4 points Resistance ($\Omega \cdot$cm) | 5.0 | 4.8 | 4.7 | 4.7 | 4.5 | 6.0 | 4.6 |

## Claims

1. A beta-alumina solid electrolyte wherein β- and β″-alumina crystals simultaneously satisfy three conditions of an average particle diameter of 1-4 μm calculated as a diameter equivalent to a circle, an amount of crystals of a particle size of not larger than 5 μm of 85-98 wt%, and a maximum particle diameter of not larger than 300 μm.

2. A method of producing the beta-alumina solid electrolyte of claim 1 wherein the particle diameters of β- and β"-alumina crystals are controlled by controlling of a heat curve of firing of the solid electrolyte.

3. A method of producing the beta-alumina solid electrolyte of claim 1 wherein the particle diameters of β- and β"-alumina crystals are controlled by addition of a third component, such as $ZrO_2$.

4. A method of producing the beta-alumina solid electrolyte of claim 1 wherein the particle diameters of β- and β"-alumina crystals are controlled by rapidly cooling of a fired solid electrolyte obtain fine β- and β"- alumina crystals.

5. A method of producing the beta-alumina solid electrolyte of claim 1 wherein the particle diameters of β- and β"-alumina crystals are controlled by increasing residual amount of sodium aluminate remaining after firing of the solid electrolyte.